# EUROPÄISCHE PATENTANMELDUNG

(11) **EP 1 674 740 A1**
(43) Veröffentlichungstag der Anmeldung: **28.06.2006**
(21) Anmeldenummer: 05023108.3
(22) Anmeldetag: 22.10.2005
(51) Int. Cl.: F16B 37/02

(54) **Blechschraubenaufnahme**

(30) Priorität: 22.12.2004 DE 102004063011
(71) Anmelder: Electrolux Home Products Corporation N.V., 1930 Zaventem (BE)
(72) Erfinder: Gerstacker, Heinrich, 90478 Nürnberg (DE)
(74) Vertreter: Hahn, Norbert

(57) **Zusammenfassung**

Die Erfindung betrifft eine Blechschraubenaufnahme in einem Blech mit einem Hülsenabschnitt (4) zur Aufnahme eines Schraubengewindes (8) und einem Senkungsabschnitt (2), der gegenüber der umgebenden Blechebene (3) abgesenkt ist und an dessen Innenbereich der Hülsenabschnitt (4) ausgebildet ist.

## Beschreibung

Die Erfindung betrifft eine Blechschraubenaufnahme in einem Blech zur Aufnahme einer Schraube, die in die Blechschraubenaufnahme einschraubbar ist. Weiterhin betrifft die Erfindung eine Kombination aus einer Blechschraube und einer Blechschraubenaufnahme sowie die Verbindung zwischen der Blechschraube und der Blechschraubenaufnahme.

Bei einer herkömmlichen Schraubverbindung ist das Anzugsmoment, mit dem die Schraube in das Blech einschraubbar ist, sowie das Überdrehmoment, bei dem durch das Anziehen der Blechschraube das Gewinde im Blech beschädigt wird, begrenzt. Je dünner das verwendete Blech, desto geringer fallen das Anzugsmoment bzw. das Überdrehmoment aus, wobei bei Dünnblechen unterhalb 0,4 mm ein direktes Einschrauben einer Schraube in das Blech nahezu nicht mehr möglich ist.

Es ist Aufgabe der Erfindung, eine Blechschraubenaufnahme, eine Kombination der Blechschraubenaufnahme mit einer Blechschraube und eine Blechschraubenverbindung vorzusehen, bei der das Anzugsmoment bzw. Überdrehmoment zum Einschrauben einer Schraube deutlich erhöht ist.

Diese Aufgabe wird mit den Merkmalen des Anspruchs 1, 15 bzw. 16 gelöst.

Vorteilhafte Ausgestaltungen sind Gegenstand der Unteransprüche.

Gemäß Anspruch 1 ist die Blechschraubenaufnahme aus einem Hülsenabschnitt zur Aufnahme eines Gewindeabschnitts einer einzuschraubenden Schraube und einem Senkungsabschnitt ausgebildet, wobei der Senkungsabschnitt gegenüber dem umgebenden Blech eine Vertiefung bildet. An den vertieften Bereich des Senkungsabschnitts schließt der Hülsenabschnitt an, der als Verlängerung des Senkungsabschnitts ausgebildet ist. Wird in eine solche Blechschraubenaufnahme von der Seite des Senkungsabschnitts her kommend in den Hülsenabschnitt eine Schraube eingeschraubt, so wird beim Anziehen der Schraube der Senkungsabschnitt komprimiert und unter eine Vorspannung in Richtung Schraubenachse gesetzt. Gegenüber dem Einschrauben einer Schraube in ein ebenes Blech führt das Komprimieren des Senkungsabschnitts dazu, dass das Gewinde nicht unmittelbar aus der Schraubenaufnahme ausreißt und zunächst eine Vorspannung aufgebaut wird. Dabei ist die Vorspannungskraft zumindest über einen Teilbereich des Kompressionswegs (elastisch und plastisch) geringer als die axiale Kraft, die bei einem Überdrehmoment kurz vor dem Ausreißen der Schraube auftritt. Auch bei Vibrationen im Bereich der Blechschraubverbindung (beispielsweise bei Verschraubung von Blechen bei einer Waschmaschine) tritt durch die Aufrechterhaltung der Elastizität und der Vorspannung kein Ausschlagen der Schraubverbindung auf.

Der Hülsenabschnitt selbst ist vorteilhaft als Durchzug ausgebildet, in dem sich eine Schraube beim Einschrauben ihr Gewinde selbst schneidet. Oder der Hülsenabschnitt ist mit einem Innengewindegang versehen.

Ganz besonders vorteilhaft ist der Hülsenabschnitt ein Durchzug, der in Verlängerung des Senkungsabschnitts einteilig aus dem Blech der Blechschraubenaufnahme ausgebildet ist. In diesem Fall lässt sich der Senkungsabschnitt und der Hülsenabschnitt kostengünstig in einem Arbeitsschritt beispielsweise durch Tiefziehen des Blechs der Blechschraubenaufnahme ausbilden. Durch das Kaltformen mittels Tiefziehen wird eine hohe Festigkeit erreicht. Durch das Tiefziehen wird auch erreicht, dass die Wandstärke im Bereich des Senkungsabschnitts im Vergleich zur umgebenden Blechebene geringer ist und somit eine Kompression des Senkungsabschnitts beim Anziehen der Schraube zum Aufbau der Vorspannung begünstigt wird.

Bei einer vorteilhaften Ausgestaltung ist der Senkungsabschnitt rotationssymmetrisch ausgebildet, z.B. kegel- bzw. kegelstumpfförmig oder konus- bzw. konusstumpfförmig. Vorteilhaft liegt der Winkel des Kegelmantels oder der Winkel zwischen dem Ansatz des Senkungsabschnitts an der umgebenden Blechebene zum Ansatz des Hülsenabschnitts am Senkungsabschnitt im Bereich von 10° bis 50°, vorteilhaft zwischen 20° und 40° und ganz besonders vorteilhaft zwischen 25° und 35°. Besonders im letzteren engeren Bereich wird beim Anziehen der Schraube beobachtet, dass sich der Senkungsabschnitt in Richtung Hülsenabschnitt zuschnürt und somit beim Anziehen der Schraube den Hülsenabschnitt um die eingeschraubte Schraube herum verlängert und so zur Verlängerung der Gewindegänge für die eingeschraubte Schraube in der Blechschraubenaufnahme führt. Vor allem dadurch ist eine Erhöhung des Überdrehmoments zu beobachten, da aufgrund der axialen Verlängerung des Hülsenabschnitts das Ausreißen der Schraube zu höheren Drehmomenten verschoben wird.

Vorteilhaft ist das Verhältnis der Länge des Hülsenabschnitts, also die axiale Abmessung der Hülse, zur Dicke des ungeformten Blechs bzw. der Dicke des den Senkungsabschnitts umgebenden Blechs größer 1 (im Bereich von 1 bis 10), vorzugsweise im Bereich von 1, 5 bis 3. Auch hier sorgt die Überhöhung des Hülsenabschnitts im Vergleich zur normalen Blechstärke für eine Erhöhung des Überdrehmoments bzw. des Anzugsmoments.

Bei einer vorteilhaften Ausgestaltung liegt das Verhältnis der Tiefe des Senkungsabschnitts (ohne die zusätzliche Vertiefung durch den Hülsenabschnitt) zur Dicke des Blechs, in dem die Blechschraubenaufnahme ausgebildet ist, im Bereich von 1 bis 20, vorzugsweise im Bereich von 1 bis 10, besonders vorteilhaft im Bereich von 2,5 bis 7. Vor allem im letzteren Bereich ist beispielsweise beim Tiefziehen das Verhältnis des Verdünnen des Blechs im Bereich des Senkungsabschnitts zur Elastizität bzw. der Formbarkeit des Senkungsabschnitts beim Anziehen der Schraube derart, dass sich einerseits der Senkungsabschnitt zur Schraube hin einschnürt und andererseits genügend Vorspannkraft des komprimierten Senkungsabschnitts aufgebaut wird.

Ganz besonders vorteilhaft wird eine solche Blechschraubaufnahme in einem Dünnblech ausgebildet, bei dem das Problem des geringen Überdrehmoments bzw. Anzugmoments besonders deutlich auftritt. Die Materialstärken des Dünnblechs liegen vorteilhaft im Bereich von 0,3 bis 0,8, vorzugsweise im Bereich von 0,35 bis 0,55 mm.

Gemäß Anspruch 15 wird für zum Herstellen einer Blechschraubverbindung eine Kombination einer Blechschraube und einer Blechschraubaufnahme gewählt, bei der der Kerndurchmesser der Blechschraube größer ist als der Innendurchmesser des jungfräulichen Hülsenabschnitts. Vorzugsweise liegt das Verhältnis zwischen Kerndurchmesser und Innendurchmesser des Hülsenabschnitts im Bereich von 1,05 bis 1,3.

Anhand von Figuren wird eine Ausführungsform der Erfindung erläutert. Es zeigen:
- Fig. 1A und 1B: eine Dünnblechschraubverbindung in Querschnittsansicht und Draufsicht, und
- Fig. 2: die Schraubverbindung von Fig. 1A und 1B nach dem Einschrauben einer Schraube.

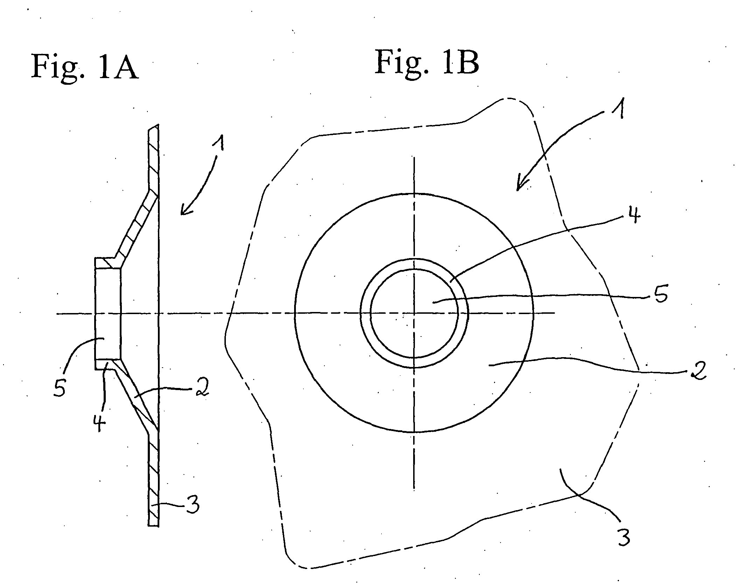

Fig. 1A zeigt eine Schraubverbindung 1 bzw. eine Blechschraubenaufnahme im Querschnitt. In einer Blechebene 3 aus Dünnblech ist mittels Kaltverformung durch Tiefziehen ein Senkungsabschnitt 2 bzw. eine Senkung ausgebildet, an deren tiefsten Punkt sich ein Durchzug 4 anschließt. Die Senkung 2 ist hier rotationssymmetrisch als Kegelstumpf ausgeformt und im Durchzug 4 schneidet sich die Blechschraube, die einzuschrauben ist, ihren Gewindegang selbst ein. Fig. 1B zeigt eine Draufsicht auf die Schraubverbindung 1 von Fig. 1A. Die Blechebene 3 ist beispielsweise ein Blechabschnitt in einem Blechformteil, einer Halterung, einem Blechband oder dergleichen.

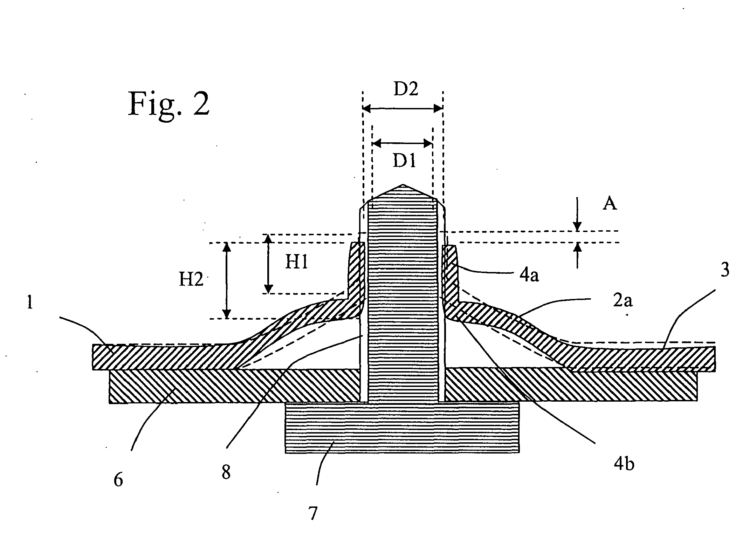

Fig. 2 zeigt eine Querschnittsansicht nach Herstellung einer Schraubverbindung zwischen der Schraubaufnahme 1 und einem Gegenblech 6 durch Einschrauben einer Schraube 7. Das Gegenblech 6 ist hier nur exemplarisch für das zu befestigende Element. Stattdessen kann ein Bauteil (z.B. eines Haushaltsgerätes), ein Halter, eine Konsole oder dergleichen als Gegenelement vorgesehen sein. Die Schraube 7 wird durch ein entsprechendes Loch im Gegenblech 6 eingeführt und durch die Senkung 2 in der Schraubaufnahme 1 zum Durchzug 4 hin zentriert, so dass sie in das Schraubloch 5 eingeschraubt werden kann. Der Kerndurchmesser der Schraube 7 ist geringfügig größer als der ursprüngliche Durchmesser D1 des Durchzugs 4 (bzw. größer als der Schraublochdurchmesser 5). In Fig. 2 ist die ursprüngliche Form der Schraubaufnahme 1 gestrichelt dargestellt. Nach dem Einschrauben ist der ursprüngliche Durchmesser D1 des Durchzugs 4 auf den mittleren Innendurchmesser D2 erweitert. Daneben sind am Innenumfang des Durchzugs 4 die Gewindegänge durch die Schraube 7 eingeschnitten. Weiterhin wird durch das Einschrauben und Anziehen der Schraube 7 die Senkung 2 zur Senkung 2a komprimiert, so dass auch der Durchzug 4 in Richtung Gegenblech 6 nach vorne gezogen wird. Diese Komprimierung der Gesamttiefe der Schraubaufnahme 1 ist in Fig. 2 mit dem Maß A schematisch dargestellt.

Weiterhin legt sich ein Teil der an den Durchzug 4 angrenzenden Senkung 2 an den Schraubenumfang an, so dass sich der Gesamtanlagebereich der Schraubaufnahme 1 längs der Schraube 7 über die in Fig. 2 dargestellte Höhe H2 erstreckt. Im ursprünglichen Zustand der Schraubaufnahme 1 hat sich die Höhe bzw. Tiefe des Durchzugs 4 lediglich über die Höhe H1 erstreckt. Somit ist ein verlängerter Durchzug 4a entstanden. Durch das Anziehen ist neben der Deformation der Senkung 2 im Bereich des Durchzugs 4 auch eine elastische Verformung der Senkung im Bereich 2a erfolgt, so dass die Senkung 2a die Schraube 7 elastisch zum Gegenblech 6 zieht. Sollte es zwischen dem Gegenblech 6 und dem Dünnblech 3 zu Vibrationen kommen, so werden diese durch die unter Vorspannung stehende Senkung 2 abgefedert. Dies verlängert die Lebensdauer von schwingungsbelasteten Schraubenverbindungen erheblich.

Ein typisches Beispiel für eine solche Blechschraubverbindung ist die Verwendung eines Dünnblechs der Stärke 0,4 mm, wobei die Tiefe der Senkung 1,5 mm und die Tiefe des Durchzugs 4 1 mm beträgt (alle Angaben im ursprünglichen Zustand wie in Fig. 1A dargestellt). Der Lochdurchmesser 5 beträgt 3,6 mm und der Winkel des Kegelstumpfes der Senkung 2 beträgt ungefähr 27°. Der Basisdurchmesser der Senkung 2 beträgt 9,5 mm und die Abnahme der Wandungsstärke durch das Kaltverformen im Bereich der Senkung beträgt 2,5/10 bis 3/10 mm. Eine zur Herstellung einer Schraubverbindung geeignete Blechschraube hat einen Durchmesser von ungefähr 4,8 mm. Durch eine solche Ausgestaltung der Schraubaufnahme 1 gegenüber dem direkten Einschrauben der Schraube in ein Loch in einem ebenen Dünnblech wird eine Erhöhung des Überdrehmoments von 80 Nm auf 150 Nm beobachtet. Selbst bei dickerem Blech von beispielsweise 0,7 mm und proportionaler Dimensionierung der Senkung und des Durchzugs wird eine Erhöhung des Überdrehmoments um 35 % beobachtet.

### Bezugszeichen

- 1: Schraubaufnahme
- 2: Senkung
- 3: Dünnblech
- 4: Durchzug
- 5: Schraubloch
- 6: Gegenblech
- 7: Schraube
- 8: Schraubgewinde

## Patentansprüche

1. Blechschraubenaufnahme in einem Blech mit einem Hülsenabschnitt (4) zur Aufnahme eines Schraubengewindes (8) und einem Senkungsabschnitt (2), der gegenüber der umgebenden Blechebene (3) abgesenkt ist und an dessen Innenbereich der Hülsenabschnitt (4) ausgebildet ist.

2. Blechschraubenaufnahme nach Anspruch 1, wobei der Hülsenabschnitt (4) als Durchzug oder mit einem Innengewindegang ausgebildet ist.

3. Blechschraubenaufnahme nach Anspruch 1 oder 2, wobei der Senkungsabschnitt (2) rotationssymmetrisch, insbesondere kegelförmig oder konusförmig, ausgebildet ist.

4. Blechschraubenaufnahme nach Anspruch 1, 2 oder 3, wobei der Hülsenabschnitt (4) in Verlängerung des Senkungsabschnitts (2) ausgebildet ist.

5. Blechschraubenaufnahme nach einem der Ansprüche 1 bis 4, wobei der Senkungsabschnitt (2) und der Hülsenabschnitt (4) durch Tiefziehen aus einer Blechebene (3) ausgebildet sind.

6. Blechschraubenaufnahme nach einem der Ansprüche 1 bis 5, wobei der Senkungsabschnitt eine Schräge oder mittlere Schräge im Bereich von 10° bis 50° zur umgebenden Blechebene aufweist, vorzugsweise im Bereich von 20° bis 40°.

7. Blechschraubenaufnahme nach einem der Ansprüche 1 bis 6, wobei das Verhältnis der Länge des Hülsenabschnitts (4) zur Dicke des Blechs (3) im Bereich von 1 bis 10 liegt, vorzugsweise im Bereich von 1,5 bis 3.

8. Blechschraubenaufnahme nach einem der Ansprüche 1 bis 7, wobei das Verhältnis der Tiefe der maximalen Absenkung des Senkungsabschnitts (2) zur Dicke des Blechs (3) im Bereich von 1 bis 20 liegt, vorzugsweise im Bereich von 1 bis 10, besonders vorzugsweise im Bereich von 2,5 bis 7.

9. Blechschraubenaufnahme nach einem der Ansprüche 1 bis 8, wobei das Verhältnis des Durchmessers oder der durchschnittlichen Breite des Senkungsabschnitts (2) zum Durchmesser des Hülsenabschnitts (4) im Bereich von 1,2 bis 5 liegt, vorzugsweise im Bereich von 1,5 bis 3.

10. Blechschraubenaufnahme nach einem der Ansprüche 1 bis 9, wobei das Verhältnis des Kerndurchmessers einer einzuschraubenden Blechschraube (7) zum Innendurchmesser des Hülsenabschnitts (4) größer als 1 ist, vorzugsweise im Bereich von 1,05 bis 1,3 liegt.

11. Blechschraubenaufnahme nach einem der Ansprüche 1 bis 10, wobei der Durchmesser einer einzuschraubenden Blechschraube (7) im Bereich von 2,5 bis 5,5 mm liegt, vorzugsweise im Bereich von 3,5 bis 4,8 mm.

12. Blechschraubenaufnahme nach einem der Ansprüche 1 bis 11, wobei die Blechschraubenaufnahme (1) in einem Dünnblech (3) ausgebildet ist, vorzugsweise in einem Blech der Materialstärke 0,3 bis 0,8 mm, besonders vorzugsweise im Bereich von 0,35 bis 0,5 mm.

13. Blechschraubenaufnahme nach einem der Ansprüche 1 bis 12, wobei der Senkungsabschnitt (2) und/oder der Hülsenabschnitt (4) durch Kaltverformung ausgebildet ist.

14. Blechschraubenaufnahme nach Anspruch 13, wobei das Verhältnis der Blechstärke im Bereich des Senkungsabschnitts (2) zur Bleckstärke der umgebenden Blechebene (3) im Bereich von 0,95 bis 0,7 liegt.

15. Kombination aus einer Blechschraube (7) und einer Blechschraubenaufnahme (1) nach einem der Ansprüche 1 bis 14, wobei das Verhältnis des Kerndurchmessers der Blechschraube (7) zum Innendurchmesser des Hülsenabschnitts (4) größer 1 ist, vorzugsweise im Bereich von 1,05 bis 1,3 liegt.

16. Blechschraubverbindung bestehend aus einer Blechschraubenaufnahme (1) nach einem der Ansprüche 1 bis 14 und einer in die Blechschraubenaufnahme eingeschraubten Blechschraube (7), wobei durch die Schraubverbindung der an den Hülsenabschnitt (4a) angrenzende Teil des Senkungsabschnitts (2a) an der Blechschraubenaußenseite angeformt ist.

17. Blechschraubverbindung nach Anspruch 16, wobei die Tiefe des ursprünglichen Senkungsabschnitts (2) im Bereich von 10 bis 80% reduziert ist, vorzugsweise im Bereich von 25 bis 50%.

18. Blechschraubverbindung nach Anspruch 16 oder 17, wobei der deformierte Senkungsabschnitt (2a) eine Vorspannung zur eingeschraubten Blechschraube (7) aufweist.

19. Haushaltsgerät, insbesondere Waschmaschine, Trockner oder Geschirrspülmaschine, mit zumindest einer Blechschraubaufnahme oder -verbindung nach einem der Ansprüche 1 bis 18.
